# EUROPEAN PATENT APPLICATION

(11) **EP 4 775 365 A1**
(43) Date of publication of application: **15.07.2026**
(21) Application number: 25151399.0
(22) Date of filing: 13.01.2025
(51) Int. Cl.: B26D 3/28, B29B 17/02, B29C 63/00, B44D 3/16, B24C 1/00, B26D 7/01, B26D 1/00

(54) **MECHANICAL REMOVAL OF PAINT AND PRIMER FROM PAINTED PCR AND PIR PARTS FOR A FURTHER USE IN THE CLOSED LOOP RECYCLING CHAIN**

(71) Applicant: Basell Polyolefine GmbH, 50389 Wesseling (DE)
(72) Inventor: LICHT, Erik, 65926 Frankfurt/M. (DE); RADKE, Olaf, 65926 Frankfurt/M. (DE); SCHWONBURG, Thomas, 65926 Frankfurt/M. (DE); DUREEV, Mikhail, 65926 Frankfurt/M (DE); ROHRMANN, Juergen, 65926 Frankfurt/M. (DE); FOERTIG, Anton, 65926 Frankfurt/M. (DE); STEER, Peter, 80686 München (DE); KOLANO, Benjamin, 81375 München (DE)
(74) Representative: LyondellBasell

(57) **Abstract**

A process for stripping a coating from a painted substrate comprising at least a base substrate and a paint layer, wherein the base substrate comprises a thermoplastic olefin is provided. The method comprises the steps of splitting the painted substrate into sections (4) having a longitudinal shape with a length (I) and a width (w), wherein the length (I) is larger than the width (w), flattening the section and mechanically stripping the paint layer at a temperature below the melting point of the base substrate.

## Description

### FIELD OF THE DISCLOSURE

The present disclosure relates to a method for removing a coating from a painted substrate, the painted substrate having at least a base substrate comprising a thermoplastic polymer, preferably a thermoplastic polyolefin and a coating on at least one surface of the base substrate.

### BACKGROUND OF THE DISCLOSURE

Compared to metal and glass products, shaped resin substrates offer numerous advantages including being lightweight, having superior impact resistance, and being cost-effective as well as easy to mold. Due to these benefits, shaped resin components are extensively utilized in automobiles, household appliances, everyday items, and various other fields. Notably, in the effort to reduce vehicle weights, resins-specifically thermoplastic polymers-have become the preferred choice over alternative materials.

A great advantage of the thermoplastic resins is their adaptability to specific application requirements. In particular, in automobile applications, such as car bumpers, the resin substrate is coated with paint not only to improve their aesthetic appearance but also to improve their resistance to bruise, scratches and harsh weather conditions.

The coating is comprised of multiple layers, e.g. a first layer, a second layer and so on. Each layer may serve a different function. For example, in order to insure strong adhesion to the base substrate, the first layer may be a formed of a primer, wherein the primer bonds with the resin surface, typically through covalent bonds. The second layer of the coating on the other hand crosslinks with the primer through covalent bonding which makes the bond between the paint layer and the primer extremely strong and cohesive. The final layered structure is chemically bonded through multiple levels of covalent bonds, with a strong, durable adhesion designed to withstand environmental stresses. This layered approach ensures that primer and remaining paint layers adhere firmly to resin surfaces providing both aesthetic appeal and protection for the painted substrate. However, because of this excellent coating performance, painted substrates having strong crosslinked structures cannot be easily stripped.

A coating, which basically comprise a first layer being a primer and a second layer being a paint layer is also referred to as single layer coatings. However, also multilayer coatings are known, the multilayer coatings involves a primer as first layer and multiple paint layers arranged on top of each other. For example, a base paint layer may be provided on top of the primer. On top of the base paint layer, a color paint layer may be applied. On top of the color paint layer, a clear paint layer may be applied.

In view of current market developments that seek for reduction of environmental footprint in the value chain of materials, including polymer materials, there is an ongoing drive to re-use materials and to reduce the quantity of "new" materials that are used in the production of a variety of articles. The use of painted substrates as feedstock for mechanical recycling is essential to reduce the material-related carbon footprint, to address plastic waste issues and to comply with possible recycling quotas for various applications, such as automobile applications.

When painted substrates are crushed for pelletizing, the coating, i.e. paint layer and primer pieces mix with the thermoplastic base material. These pieces can obstruct resin flow, causing molding issues like burn marks or blisters, and lead to inhomogeneities in the resin mold, significantly weakening the mechanical properties of the recycled product. As a result, the use of this recycled resin is greatly limited.

Consequently, removing of the coating from painted substrates is necessary in order to recycle the substrates for use in high demanding applications such as for automotive parts.

Chemical stripping of the coating is a well-known technique. These methods are particularly effective for removing paint from complex geometries with curved and recessed areas. However, they present challenges due to the use of specific solvents that may contain hazardous or toxic substances, necessitating an additional processing step to remove the solvents.

Especially for high demanding applications, such as automobile applications, where even small defects may cause a substrate to be scrapped, stripping with a solvent is not suitable. It has been found that small amounts of the solvent remains trapped in the polymer substrate causing defects such as blisters during thermal curing of the paint due to evaporation.

Consequently, there is a need for a method for stripping a paint layer from a painted substrate, which reliably provides a high purity resin material for recycling applications.

### SUMMARY OF THE DISCLOSURE

The present disclosure provides a method for removing a coating from a painted substrate, the painted substrate comprising at least a base substrate and a paint layer, wherein the base substrate comprises a thermoplastic polymer and a coating formed on at least one surface of the base substrate. The method comprises the steps of:
i. splitting the painted substrate into sections (4) having a longitudinal shape with a length (I) and a width (w), wherein the length (I) is larger than the width (w)
ii. flattening the painted substrate; and
iii. mechanically removing the coating at a temperature below the melting point, preferably below the softening point of the base substrate.

The method of the present disclosure allows for a removal of the coating without the use of a chemical solvent. Consequently, defects caused by traces of solvent being present in the recycled polymer when painted can be mitigated. The mechanical removal at a temperature below the melting point, preferably below the softening point of the base substrate prevents particles of the coating, i.e. primer particles or the paint layer particles to become embedded into the polymer melt, which may cause defects in the final article. By prior flattening of the painted substrate, it can be assured that the coating is uniformly removed from the base substrate.

Hereinafter, further developments are specified which are themselves advantageous per se and can be combined with one another, independently of one another.

For example, the coating may comprise a paint layer bonded to the base substrate via a primer. In this case, both the paint layer and the primer are mechanically removed from the base substrate. In order to assure complete removal of paint layer and primer, the mechanical removal may be adapted to also remove an uppermost portion of the base substrate, which is painted. Consequently, a portion of the thermoplastic polymer is sacrificed in order to ensure a high quality of the polymer material for recycling.

In some embodiments, the painted substrate may be an article from an automobile application, such as interior trims and/or exterior parts, particularly bumpers. The painted substrate may comprise a complex geometrical shape. In this case, the painted substrate may be cut into multiple sections of rather regular shape.

The mechanical removal of the coating may comprise at least one step of abrading and/or scraping the coating and the primer. For example, the coating may be removed by sand blasting, milling, brushing or planing. In some embodiment, at least one paint layer of the coating may be removed in a first step prior to a second step of removing primer and optionally remaining paint layers. The paint layer may for instance be removed via ultrasonic treatment in a first step and the primer may then be removed in a subsequent step of abrading and/or scraping.

With sand blasting, a sand blasting chamber may be provided in which the flattened substrate is placed. Subsequently, fine granular abrasive material is blasted toward the painted surface of the painted substrate to break thereof and removing the broken coated resin.

However, a particularly cost effective method of mechanically removing the coating is by planing. For this, a processing apparatus for scraping off the coating, and optionally may be provided. The processing apparatus comprises at least one blade shaft, which comprises at least one scraping blade having a double sided bevel.

The blade shaft may be rotated around its axis, while the substrate is moved horizontally across the blade shaft at a pre-determined height. The pre-determined height may be chosen such that the scraping blade scrapes off a predetermined depth of the painted substrate. A measurement of the layer thickness may precede the planing step such that the pre-determined height may be controlled based on the measurement of the layer thickness. Preferably, the pre-determined depth may be chosen to be 0.1 to 0.5 mm deeper than the measured paint layers and primer.

Preferably, the blade shaft comprises at least two scraping blades arranged diametral to one another along the blade shaft. The scraping blades may extend parallel to the longitudinal axis of the blade shaft or at an angle thereto. The blade shaft may comprise from two to six, preferably from two to four scraping blades arranged equidistantly along the circumference of the blade shaft. The scraping blade may particularly have an asymmetric bevel.

In some embodiments, a vertical force is applied on the substrate while being conveyed along the processing apparatus, the vertical force flattening or keeping the substrate in a flattened state while the substrate is being conveyed along a horizontal direction through the processing apparatus.

The vertical force may for example be a suction force acting on the substrate while moving over the at least one blade shaft. The suction force may be applied by a vacuum. The vacuum may preferably remove any debris from scraping in order to prevent clogging of the processing apparatus.

The stripping efficiency is further improved, by the painted substrate being split into multiple sections. For example, instead of sending a bumper having a complex geometric shape through the processing apparatus, the bumper is cut into multiple sections of regular shape, which may be easily flattened. Preferably the sections may comprise a longitudinal shape having a length and a width, wherein the length is at least longer than the width. The length may for example be 2 to 50 times the width, preferably 4 to 40 times the width, more preferably 10 to 25 times the width.

The length of the painted substrate, in particular the section, may be from 15 cm to 80 cm, preferably, between 20 cm and 60 cm, more preferably between 25 cm and 50 cm. In case the painted substrate is conveyed via a roller system, the length of the painted substrate, in particular the section, may be at least as long as the distance between the rotation centers of adjacent rollers.

The width of the painted substrate, in particular the width of the section of the painted substrate for stripping, may be between 5% to 80%, preferably between 8% to 70%, more preferably between 10% to 50% percent of the width of the at least one blade shaft. In some embodiments, the width of the section is lower than 50%, preferably lower than 40%, more preferably lower than 30% of the width of the at least one blade shaft. Thus, excessive heating of the substrate due to the frictional force applied to the substrate when planning is prevented.

Painted substrates, in particular from automobile applications such as bumpers are normally painted on one side only. The side facing away from the painted surface is usually not painted. However, it has been found that an even purer thermoplastic polymer may be reclaimed if also the outer surface opposite the painted layer is scraped. A scraping depth of the outer surface facing away from the coating may be lower than the scraping depth on the painted layer.

According to an exemplary embodiment, the process may further comprise the step of removing vertical protrusions and/or indentations. The protrusions and/or indentations may preferably be removed before the stripping step.

Painted substrates, such as bumpers, comprise a curved shape. While the substrate may be cut into multiple sections, these sections may still exhibit a curved profile. Such a curved profile may cause islands of paint to remain on the substrate after scraping if the substrate is not flattened. In order to ensure that the substrate remains flattened during scraping, the surface tension of the substrate, in particular the section, may be removed prior or during flattening.

The surface tension may for example be removed by at least one of rolling, cutting, walzing and/or warming. A spiked roll or spiked press may be provided to break the surface tension of the section to be stripped. The surface tension may be removed by the provision of at least one cut and/or notch. In contrast to a cut, a notch does not go through all layers of the painted substrate. A notch may preferably be provided on the opposite surface facing away from the coating. At least one notch may extend in the longitudinal direction or in the horizontal direction. Preferably, a plurality of notches extending in the horizontal direction may be provided for reducing the surface tension along the length of the section.

A particularly effective way of removing surface tension of the section to be stripped, is to provide at least one longitudinal cut that may extend from one end of the section along a longitudinal direction. In some embodiments, longitudinal cuts may be provided on both ends of the section and run towards the center along the longitudinal direction.

In some embodiments, the longitudinal cut extends from one end of the section to more than 10%, preferably more than 20%, even more preferably more than 25% of a longitudinal length of the section. The longitudinal length of the slit can be up to 80%, preferably up to 70%, more preferably up to 60% of longitudinal length of the section.

In some embodiments, a plurality of longitudinal cuts may be provided, the plurality of longitudinal cuts being arranged parallel to one another.

The present disclosure further relates to a thermoplastic polymer reclaimed from the process of the present disclosure. The thermoplastic polymer may particularly be free of any solvent. The presence of primer and/or paint particles in the thermoplastic polymer may be lower than 100 ppm, preferably lower than 10 ppm, more preferably lower than 1 ppm.

The reclaimed thermoplastic polymer may, in some embodiments, be further purified by melt filtration. The reclaimed thermoplastic polymer may for example be crushed and/or pelletized. In some embodiments, the reclaimed thermoplastic polymer is used to form a base substrate of a painted substrate. For example, the reclaimed thermoplastic polymer may be used as the base substrate for interior and/or exterior trims in automobile applications. The thermoplastic polymer may in particular be injection molded into an article, such as a bumper.

### BRIEF DESCRIPTION OF THE DRAWINGS

Figure 1 shows schematically an exemplary embodiment of a painted substrate;
Figure 2 shows a schematic top view of a section of the painted substrate;
Figure 3 shows a schematic drawing of a processing apparatus.

### DETAILED DESCRIPTION OF THE DISCLOSURE

In the context of the present disclosure;
- the percentages are expressed by weight, unless otherwise specified;
- the total weight of a composition sums up to 100% by weight, unless otherwise specified;
- the term "comprising" referred to a polymer or to a polymer composition, mixture or blend should be construed to mean "comprising or consisting essentially of';
- the term "consisting essentially of" means that, in addition to those components which are mandatory, other components may also be present in the material, provided that the essential characteristics of the material are not materially affected by their presence. Examples of components that, when present in customary amounts, do not materially affect the characteristics, of a polymer or of polymer compositions, mixtures or blends are catalyst residues, antistatic agents and processing aids;

the term "copolymer" is referred to a polymer deriving from the intentional polymerization of at least two different comonomers, i.e. the term "copolymer" includes terpolymers;
the term "virgin" refers to a plastic material that originates from feedstock and that has never been used by a consumer. That is, to a non-recycled material;
   - the terms "pre-consumer waste" and "post-industrial waste" are synonyms and designate a material diverted from the waste stream originating from a manufacturing process. It might be material trimmings, faulty items, overstock raw materials, excess inventory, etc.;
   - the term "post-consumer waste" designate a material that has been converted into a product, used by the consumer and discarded after use;
   - the term "PCR" or "post-consumer recyclate" refers to a plastic material originating from the mechanical recycling of a post-consumer waste;
   - the term "PIR" or "post-industrial recyclate" refers to a plastic material originating from the mechanical recycling of a post-industrial waste;
   - the term "mechanical recycling" refers to operations that aim to recover plastic material via mechanical processes, like sorting, grinding, washing, separating, drying, re-granulating and compounding, thus producing PCRs that can be converted into plastics products;
   - the term "painted substrate" refers to articles having a base substrate comprising of a thermoplastic polymer, wherein a coating is provided on at least one outer facing surface.
   - the term "coating" refers to a coat that is applied to the base substrate. The coating comprises a primer as a first layer and at least one paint layer applied on the primer.
   - the term "primer" refers to an adhesion enhancer, which may also be designated as a preparatory coating layer applied to a surface before a main paint layer is applied;
the term "planing" refers to a manufacturing process, where a cutting tool shaves thin layers from the surface of a workpiece to refine its dimensions. The workpiece and/or tool moves reciprocally during the process.

The present disclosure will now be described in details hereinafter with reference to the accompanying drawings, which illustrate preferred embodiments thereof.

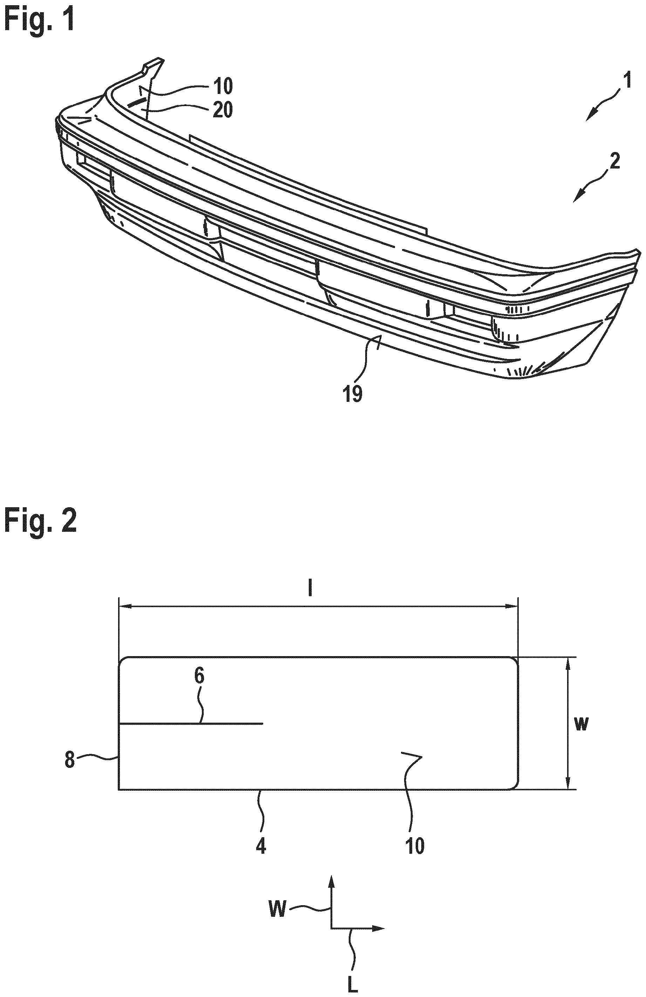

The present disclosure relates to a process of stripping a paint layer from a painted substrate. In Fig. 1, a painted substrate 1 is shown in the form of a bumper 2 in a schematic perspective view. The bumper 2 may be derived from pre-consumer waste, e.g. from a production or assembling line as a defected article in a production line, or preferably from post-consumer waste, e.g. from a vehicle that has reached its end of life.

The painted substrate 1 may comprise a base substrate formed out of a material adapted for the specific application requirements. Bumpers typically deliver flexibility combining properties like narrow gap tolerances, superior scratch resistance and good paint adhesion and processability. The base substrate may be formed from durable polymeric materials selected for their impact resistance, flexibility and lightweight characteristics. Such materials may include, but are not limited to thermoplastics and thermosetting polymers, thermoplastic olefins, such as polypropylene, polycarbonate blends and polyurethanes. In some embodiments, the base material may incorporate fiber-reinforced composites or elastomeric materials to enhance structural integrity and resilience.

The base substrate may for example be formed of a composition comprising at least one heterophasic polypropylene component, a homophasic polypropylene component, an elastomer and talc. The elastomer may for example be an ethylene based elastoplastic copolymer and or a styrene based elastomer.

The bumper 2 will be cut into multiple sections, preferably into longitudinal strips having a length and a width little to no curvature with respect to a plane spanned by the length and width direction. The bumper 2 may in an exemplary embodiment may be analyzed, e.g. via visual detectors, wherein the feedback from the analysis may provide an optimal cutting strategy for receiving multiple longitudinal sections of regular shape and little curvature.

An schematic top view of a section 4 is shown in Fig. 2.

The sections may comprise a longitudinal shape having a length I and a width w, wherein the length I may be least 2 to 50 times the width w, preferably 4 to 40 times the width w, more preferably 10 to 25 times the width w. While the illustration is shown to be of an essentially rectangular shape, it is understood that the section may also have an irregular shape, wherein the width may vary along the length. In this case, the width w is understood as the maximum width of the longitudinal shape along the length of the section. The length I may for example be between about 20 cm to about 110 cm, preferably about 23 cm to about 95 cm, more preferably from about 25 cm to about 80 cm.

In order to further improve the planarity of the sections, the surface tension may be broken, e.g. by a rolling, cutting, walzing and/or warming process. A spiked roll or spiked press may be provided to break the surface tension of the section to be stripped. However, spiked rolls may further cause protrusions or dents leading to an unevenness, of the section, which may limit the efficiency of the stripping process.

A particularly effective way of removing surface tension of the section to be stripped, is to provide at least one longitudinal cut 6 that may extend from one end of the section along a longitudinal direction. Multiple longitudinal cuts may be provided arranged parallel to one another. These longitudinal cuts may preferably extend from a rear end facing away from the stripping device when fed. In some embodiments, the longitudinal cuts may extend from opposing ends towards the middle of the section. In contrast to the longitudinal cuts, horizontal cuts along the length of the longitudinal section may create edges which may cause interruptions in the stripping process.

In some embodiments, the longitudinal cut extends from one end of the section to more than 10%, preferably more than 20%, even more preferably more than 25% of a longitudinal length of the section. The longitudinal length of the slit can be up to 80%, preferably up to 70%, more preferably up to 60% of longitudinal length of the section.

By the provision of the at least one longitudinal cut 6,the surface tension of the section 4 is broken allowing it to be easier flattened.

The planarity of the section may be further improved by removing any indentations, e.g. embossings or protrusions protruding from a plane spanned by a width direction W and a longitudinal direction L, e.g. by cutting them out. Preferably, if present, shaped edges with which the sections would rest on the plane are removed. Those shaped edges may have a stronger rigidity than the remainder of the section and a part that protrudes from the plane, which may potentially lead to a curved profile of the section, when being flattened. By removing the shaped edges, such an occurrence of a curved profile may be mitigated.

The section 4 comprises a painted surface shown face down in Fig. 2 and an opposite surface 10 facing away from the painted surface. The opposite surface is usually an inward facing part and thus not visible for the consumer. Consequently, applying application of a coating, particularly a primer on the opposite surface may be omitted.

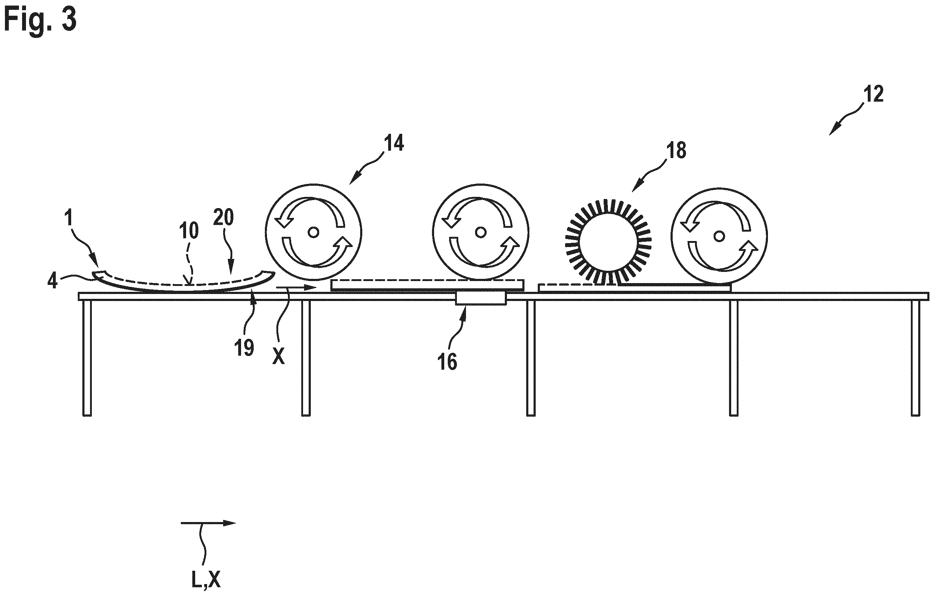

In Fig. 3, a scheme of the process for stripping the coating 19 from a painted substrate 1, in the form of a cutout section from a bumper.

The section 4 is placed on a processing apparatus 12 which comprises conveying means 14, which conveys the section 4 in a conveying direction X, which is essentially parallel to the longitudinal direction L. The section 4 is placed such that the longitudinal cut is extending from the rear end 8 facing away from the conveying direction X and the opposite surface 10 faces upwards.

The conveying means 14, may be provided in the form of rollers, which exert a driving force moving the section along the conveying direction through the processing apparatus 12. The conveying means 14 may also exert a vertical force onto the section 4, flattening the section 4 before reaching a stripping tool 16, e.g. a mill, brush or planing tool. In particular a conveying means can be aligned with the stripping tool 16 providing a counter weight acting against the force applied to the section 4 by the stripping tool 16.

In a preferred embodiment, a suction force is applied to the section 4 while being moved over the stripping tool 16. The suction force may for example be provided by a vacuum chamber, which also removes any debris from scraping in order to prevent clogging of the processing apparatus. The suction force may be equally distributed over a large surface, thus further improving the planarity of the section when moving over the stripping tool.

The stripping tool 16 may in an exemplary embodiment be formed as a blade shaft, which is rotatable around its rotation axis, the rotation axis being arranged essentially perpendicular to the conveying direction X. The blade shaft comprises at least one scraping blade arranged on the lateral surface. Preferably, at least two scraping blades are provided arranged equidistantly on the lateral surface of the blade shaft. In one embodiment, the scraping blades extend obliquely to an axis parallel to the rotation axis. Consequently, the scraping will gradually on the section preventing flapping of the section during stripping.

Alternatively or additionally, flapping may further be prevented by providing a scraping blade having a double sided bevel. Preferably, the double sided bevel is asymmetrical. The scraping blade may be removably mounted on the blade shaft, wherein the scraping blade is mounted such that the apex of the scraping blade protrudes from the lateral surface of the blade shaft. The bevel of the scraping blade on a side facing away from the rotational direction may form a sharp angle with a tangent of the apex, while the side facing in the rotational direction may form an obtuse angle with the tangent.

The blade shaft may rotate around its axis at around 2000 to 12000 revolutions per minute, preferably around 3000 to 8000 revolutions per minute, more preferably 4000 to 7000 revolutions per minute having 2, 3 or 4 scraping blades. In some embodiments, an even number of scraping blades is provided, wherein pairs of scraping blades are arranged diametrically from one another.

According to the present disclosure the paint layer and primer is being removed at a temperature below the melting point, preferably below the softening point of the base substrate. This ensures that paint and/or primer particles are actually removed and not embedded into the base substrate. The temperature may for example be below 120°C, preferably below 100°C, more preferably below 90°C. It is understood that mechanically acting upon the section, e.g. via friction may increase the temperature above the melting point or softening point. Such an excessive increase in temperature may be prevented by adapting the surface area of the section, the reciprocal motion between stripping tool and the section and/or the method of stripping. It has been found that in particular stripping via a planing apparatus, in which the paint layer and optionally primer is scraped off allows for a good stripping efficiency while working below the melting point of the base substrate.

In addition to removing the paint layer and optionally the primer, a second stripping tool 18 may be provided, which removes a predefined thickness of opposite surface 10. The second stripping tool 18 may for example be a roller, a wire brush or a scraping tool. In one embodiment, the stripping tool and the second stripping tool may be of the same type. It was found that even if the opposite surface 10 is not painted, paint dust 20 from the painting process may settle on the opposite surface. Thus, the quality of the recycled product can be even further enhanced.

The stripping tool and the second stripping tool may be arranged such that a predetermined depth of the surface is removed. The predetermined depth may for example be set to a constant value. However, in an exemplary embodiment, a depth of the coating is measured before stripping. The stripping tool may be adjusted to remove a depth that is from 0.1 to 0.5 mm deeper than the measured depth of the at least one paint layer and primer.

It has been found that with the process of the present disclosure an effective stripping process is achieved which is not reliant on the utilization of chemical stripping agents. Traces of such chemical stripping agents remain in the recycled polymer, which causes the formation of blisters after painting. However, the regained polymer of the present description does not contain traces of chemical stripping agents and thus does not exhibit blisters after painting. Furthermore, the present stripping process ensures that the presence of primer or paint particles embedded in the base substrate is mitigated further enhancing the quality of the recycled polymer. Primer and/or paint particles when transferred into the extruder together with the stripped section would not melt and remain as solids in the melt. When pelletizing the solid particles are embedded as contaminants into the particles, which would then migrate to the surface causing blisters.

### Reference numerals

- 1: painted substrate
- 2: bumper
- 4: section
- 6: longitudinal cut
- 8: rear end
- 10: opposite surface
- 12: processing apparatus
- 14: conveying means
- 16: stripping tool
- 18: second stripping tool
- 19: coating
- 20: paint dust

- I: length
- L: longitudinal direction
- w: width
- W: width direction
- X: conveying direction

## Claims

1. A method for removing a coating from a painted substrate (1), the painted substrate (1) comprising at least a base substrate and a coating, wherein the base substrate comprises a thermoplastic olefin, the method comprising the steps of:
i. splitting the painted substrate into sections (4) having a longitudinal shape with a length (l) and a width (w), wherein the length (I) is larger than the width (w);
ii. flattening the sections (4) and
iii. mechanically stripping the coating at a temperature below the melting point, preferably below the softening point of the base substrate.

2. The method of claim 1, wherein the mechanical stripping of the paint layer is done by scraping and/or cutting.

3. The method of claim 1 or 2, wherein the method further comprises the step of removing a predetermined depth of an opposite surface (10) facing away from the painted layer.

4. The method of any one of claims 1 to 3, wherein the section (4) is freed from protrusions and/or indentations prior to stripping.

5. The method of any one of claims 1 to 4, wherein the stripping step is carried out in the absence of a liquid chemical stripping agent.

6. The method of any one of claims 1 to 5, wherein a surface tension of the section is reduced prior to the stripping step.

7. The method of claim 6, wherein the surface tension of the section is reduced via at least one longitudinal cut (6).

8. The method of claim 7, wherein the at least one longitudinal cut extends from a rear end (8) in a longitudinal direction.

9. The method of claim 7 or 8, wherein the at least one longitudinal cut extends between 10% to 80%, preferably 20% to 70%, more preferably 25% to 60% of the length of the section.

10. The method of any one of claims 1 to 9, wherein a processing apparatus (12) for scraping off the paint layer is provided, the processing apparatus comprising at least one stripping tool (16) having at least one scraping blade having a double sided bevel.

11. The method of claim 10, wherein the stripping tool (16) comprises a blade shaft rotatable around its axis, wherein at least two scraping blades are provided at a lateral surface of the blade shaft.

12. The method of claim 10 or 11, wherein the scraping blades comprise an asymmetric double sided bevel.

13. The method of any one of claims 10 to 13, wherein the section is conveyed along the processing apparatus, while a vacuum is applied on the section flattening the substrate while scraping off the paint layer.

14. A thermoplastic polymer, preferably a thermoplastic polyolefin obtained by the method of any one of claims 1 to 13, wherein the thermoplastic polymer resin is essentially free of a liquid chemical stripping agents and comprises less than 100 ppm of paint particles and/or primer particles.

15. A painted article comprising the thermoplastic polymer resin of claim 14 as a base substrate.
